**Europäisches Patentamt**

(19) **European Patent Office**

**Office européen des brevets**

(11) Veröffentlichungsnummer: **0 105 167**
**B1**

(12) # EUROPÄISCHE PATENTSCHRIFT

(45) Veröffentlichungstag der Patentschrift:
**01.06.88**

(51) Int. Cl.⁴: **C 08 J 11/04**

(21) Anmeldenummer: **83108252.4**

(22) Anmeldetag: **22.08.83**

(54) Verfahren zum kontinuierlichen glykolytischen Hochtemperatur-Abbau von Polyurethankunststoffabfällen in Schneckenmaschinen.

(30) Priorität: **01.09.82 DE 3232461**

(43) Veröffentlichungstag der Anmeldung:
**11.04.84 Patentblatt 84/15**

(45) Bekanntmachung des Hinweises auf die Patenterteilung:
**01.06.88 Patentblatt 88/22**

(84) Benannte Vertragsstaaten:
**BE DE FR GB IT**

(56) Entgegenhaltungen:
**DE - A - 2 738 572**
**DE - B - 2 442 387**
**DE - B - 2 516 863**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Niederdellmann, Georg, Dr., Heinestrasse 6, D-4047 Dormagen (DE)**
Erfinder: **Grigat, Ernst, Dr. Prof., Am Domblick 13, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur kontinuierlichen glykolytischen Aufspaltung von Polyurethankunststoffabfällen in Mehrwellenschneckenmaschinen durch Zusatz gegebenenfalls vorerhitzter Diole, bei Spalttemperaturen von 250°C unter Aufrechterhaltung mindestens eines solchen Druckes, dass das Polyurethan-Diol-Gemisch in flüssiger Phase vorliegt und Austragung des Glykolysatgemisches nach kurzen Verweilzeiten von 2 bis 30 Minuten in der Reaktionsschnecke und schnelles Abkühlen des Glykolysatgemischs.

Mit dem starken Anwachsen der polyurethanerzeugenden Industrie ist auch das Problem der Beseitigung und Wiederverwertung von Polyurethanabfällen bzw. Polyurethanausschussware gestiegen. Für Flocken aus Polyurethanweichschaum wurde zwar ein Markt durch Zusammenkleben des Flockenmaterials zu Verbundkörpern gefunden, doch kann auf diese Weise nur eine begrenzte Menge an Weichschaumstoffmaterialien verwertet werden. Für Abfälle aus halbharten und harten Polyurethanschaumstoffen sowie für Elastomergranulate besteht dagegen keine ähnliche Verwendungsmöglichkeit. Es müssen daher grosse Mengen an Polyurethanabfall- und Polyurethanausschussware aus der Hart- und Weichschaumproduktion sowie der Elastomerproduktion auf Deponien gelagert oder in Müllverbrennungsanlagen vernichtet werden. Dabei entstehen infolge des geringen spezifischen Gewichts und, damit verbunden, des grossen Volumens der Abfall- bzw. Ausschussware erhebliche ökologische, technische und wirtschaftliche Probleme.

Es besteht daher aus ökologischen und ökonomischen Gründen ein erhebliches Interesse, die ständig anwachsenden Mengen an Polyurethanabfällen einer wirtschaftlichen Wiederverwertung zuzuführen. Zum Aufarbeiten und/oder zum Abbau von Polyurethankunststoffabfällen durch glykolytische Spaltung, z.T. unter Zusatz von Aminoalkoholen und/oder Katalysatoren, sind bereits mehrere Verfahren bekannt geworden, beispielsweise aus den deutschen Auslege- bzw. Offenlegungsschriften 1 110 405, 2 238 109, 2 304 444, 2 414 091, 2 516 863, 2 557 172, 2 738 572, 2 759 054, und 2 902 509, den US-Patentschriften 3 632 530, 4 014 809, 4 110 266, 4 159 972 und 4 162 995 sowie den japanischen Patentschriften 51 006-909, 52 004-596, 53 022-595 und 56 099-244.

Die Vielzahl dieser einschlägigen Arbeiten lässt erkennen, dass offensichtlich keines der beanspruchten Verfahren eine befriedigende Problemlösung bietet. In der Tat sind die vorbeschriebenen Verfahren durch eine Reihe von Nachteilen in ihrer technischen Anwendungsbreite sowie in ihrer Wirtschaftlichkeit stark eingeschränkt:

1. Die im allgemeinen mehrere Stunden betragenden Löse- und Reaktionszeiten führen zu unbefriedigenden Raum-/Zeit-Ausbeuten und beschränken die Wirtschaftlichkeit.

2. Die für die Auflösung und Spaltung der Polyurethanabfälle benötigten Diolmengen liegen im Bereich gewichtsgleicher Mengen, häufig jedoch höher, so dass die erhaltenen Regeneratpolyole mengenmässig ein Mehrfaches der eingesetzten Abfälle betragen, ausserdem werden in vielen Fällen die reaktiveren Aminoalkohole mitverwendet.

3. Die bis zu 250°C betragenden Spalttemperaturen führen bei den beschriebenen langen Reaktionszeiten (z.B. 2–12 Stunden) zu unerwünschten Nebenreaktionen und thermischer Schädigung der Regeneratpolyole, so dass diese nur in beschränktem Masse einem Reinpolyol zugeschnitten werden können. Im Hinblick auf die die Abfallmengen deutlich übersteigenden Regeneratpolyolmengen führt dieser Tatbestand in der Praxis zu ganz erheblichen Schwierigkeiten bei einer Rückführung dieser Regeneratpolyole in den Produktionsprozess.

4. Durch pH-Wertverschiebungen, durch Zusatz spezieller Katalysatoren und/oder die Mitverwendung von Cospaltern z.B. Ammoniak, Aminen oder Alkanolaminen lässt sich eine begrenzte Verkürzung der Reaktionszeit und/oder Absenkung der Spalttemperatur erreichen, nachteilig wirken sich dabei aber die durch die Katalysatoren bzw. Cospalter geänderten Eigenschaften der Regeneratpolyole auf ihre Wiederverwendbarkeit aus.

5. Polyurethankunststoffe sind gekennzeichnet durch eine aussergewöhnliche Variationsbreite ihres chemischen Aufbaus. Entsprechend ihrer jeweils angestrebten Eigenschaften können sie neben Urethanbindungen in erheblichem Masse Harnstoff-, Biuret-, Allophanat-, Isocyanurat-, Carbodiimid- und/oder Estergruppen enthalten. Dieser Tatbestand erfordert eine jeweils rezepturbezogene Optimierung der Spaltbedingungen sowie eine spezielle Auswahl geeigneter Spaltdiole bzw. Diol-Cospalter-Gemische. In diesem Sinne sind auch die z.T. sehr spezifischen Ansprüche der o.g. Patentschriften zu verstehen; so beansprucht beispielsweise die DE-OS 2 304 444 speziell die Spaltung von Polyisocyanuratabfällen, Gegenstand der DE-OS 2 414 091 ist hingegen die Spaltung Carbodiimidgruppen aufweisender Polyurethane.

Polyurethanabfallgemische wechselnder Zusammensetzung sowie auch Abfälle unbekannter Rezeptur sind daher nicht mit den bekannten Verfahren technisch zufriedenstellend aufzuarbeiten.

6. Auf dem Gebiet der Polyurethan-Weich- und -Hartschaumstoffe steigt der Anteil der durch Zusatz von Chloralkylphosphaten flammwidrig ausgerüsteten Einstellungen. Derartige Phosphatesterzusätze liefern bei der glykolytischen Spaltung der Schaumstoffabfälle Regeneratpolyole mit hohen Säurezahlen, die einen direkten Einsatz nicht gestatten und eine Nachbehandlung mit Propylenoxid notwendig machen (Kunststoff-Journal Nr. 5 (1975), S. 24; Polymer Eng. Sci. 18 (1978), Nr. 11, S. 846; SYSpur Rep. 1977, Heft 12, S. 56–65). Der Umgang mit Propylenoxid erfordert jedoch einen nicht unerheblichen apparativen und sicherheitstechnischen Aufwand.

Es wurde nun überraschend gefunden, dass sich ohne die erwähnten Nachteile Polyurethane unterschiedlichster Rezepturen bei relativ geringem Bedarf an Spaltglykol in einer universellen Verfahrensweise mittels einer speziell ausgerüsteten Schneckenmaschine wirtschaftlich und kontrollierbar kontinuierlich innerhalb kurzer Zeit und bei hohen Temperaturen ohne wesentliche Schädigung der Polyole zu wiederverwertbaren Polyolen spalten lassen. Die Verwendung von Schneckenmaschinen ist bisher nur für die irreversible, kontinuierliche Hydrolyse von Polyurethanabfällen in der DOS 2 442 387 beschrieben. Es war völlig überraschend, dass sich derartige Maschinen auch für die kontinuierliche Durchführung reversibel ablaufender Umurethanierungsreaktionen wirtschaftlich einsetzen lassen, da es sich bei der Glykolyse im wesentlichen um eine Gleichgewichtsreaktion der Umurethanisierung, bei der Hydrolyse jedoch um eine irreversible Reaktion unter $CO_2$-Abspaltung handelt.

Gegenstand der vorliegenden Erfindung ist somit ein Verfahren zum kontinuierlichen glykolytischen Abbau von Polyurethankunststoffabfällen durch Zusatz von gegebenenfalls vorerhitzten Diolen, gegebenenfalls in Gegenwart von Alkalialkoholaten als Katalysator und Durchführung bei erhöhten Temperaturen und unter erhöhtem Druck, welches dadurch gekennzeichnet ist, dass die Kunststoffabfälle zusammen mit den auf 150–250 °C erhitzten Diolen im Gewichtsverhältnis 5:1 bis 2:1, sowie gegebenenfalls unter Zusatz von Alkaliglykolaten, in eine mehrwellige Schneckenmaschine eingespeist werden, wo das Gemisch aus Kunststoffabfällen und Diolen sowie gegebenenfalls Alkaliglykolaten in einer Reaktionszone unter intensivem Stoff- und Wärmeaustausch in einer mittleren Reaktionszeit von 5 bis 15 Minuten bei einer Temperatur von 260 bis 330 °C, besonders bevorzugt 260 bis 300 °C, unter Aufrechterhaltung einer flüssigen Diolphase in der Spaltmischung durch einen Druck bis 100 bar, vorzugsweise bis 80 bar, besonders bevorzugt 5 bis 30 bar, gehalten wird und das bei der glykolytischen Spaltung entstehende polyolhaltige Spaltgemisch über ein mit der Schneckenmaschine verbundenes Mundstück unter Aufrechterhaltung des Verflüssigungsdruckes und eines konstanten Flüssigkeitsniveaus in ein gekühltes Entspannungsgefäss und in einen gekühlten Auffangbehälter austritt, wobei die Temperatur des erhaltenen Spaltpolyolgemischs in weniger als 30 Minuten, vorzugsweise innerhalb von 5 bis 15 Minuten, auf weniger als 150 °C, bevorzugt auf 80 bis 100 °C, abgesenkt wird.

Insbesondere wird das Verfahren in einer Schneckenmaschine mit einem temperierbaren Gehäuse mit Aufgabetrichter und Auslassmundstück und gleichsinnig rotierenden Mehrwellenschnecken durchgeführt, wo die Schneckenwellen bis über den Bereich des Aufgabetrichters hinaus einen Gewindeabschnitt mit einer hohen Steigung (mehr als 90 mm, vorzugsweise mehr als 100 mm) aufweisen, an den ein Gewindeabschnitt mit niedriger Steigung (weniger als 70 mm, vorzugsweise weniger als 60 mm) anschliesst, während der restliche Abschnitt der Schneckenwelle mit Knetscheiben besetzt ist. Kennzeichnend für die Schneckenmaschine ist ferner, dass in Förderrichtung gesehen vor dem Aufgabetrichter ein Luftabzug vorgesehen ist, dass hinter dem Aufgabetrichter im Bereich des Gewindeabschnitts niedriger Steigung eine Glykolzuspeisung einmündet, und dass das Mundstück mit einer Druck- und Niveau-Regelung versehen ist. Das bei der glykolytischen Spaltung entstehende polyolhaltige Spaltgemisch wird aus der Schneckenmaschine in ein damit verbundenes Mundstück gefördert, aus welchem es über ein Tauchrohr, welches ein konstantes Flüssigkeitsniveau innerhalb des Mundstückes aufrechterhält und ein Regelventil, welches den konstanten Schneckenmaschinendruck im Mundstück aufrechterhält, zunächst in ein gekühltes Entspannungsgefäss und danach in den gekühlten Auffangbehälter gelangt. Das zur Spaltung benutzte Diol wird vorzugsweise über Wärmetauscher am Austragsteil der Maschine für die Einführung in die Mehrwellenschnecke vorgeheizt.

Eine geeignete Schneckenmaschine mit Mundstück ist aus der deutschen Offenlegungsschrift 2 442 387 bekannt, wo man eine Hydrolyse von Polyurethanabfällen durch Zugabe von Wasser durchgeführt hat.

Im erfindungsgemässen Verfahren müssen folgende Einzelschritte nacheinander bzw. nebeneinander ablaufen:

1. Kontinuierliche Förderung und Entgasung der Polyurethanabfälle;

2. Kontinuierliche Einförderung des auf 150 bis 250 °C vorerhitzten Diols,

3. Temperaturaufbau im Polyurethan-/Diol-Gemisch auf 260 bis 330 °C;

4. Druckaufbau im Polyurethan-/Diol-Gemisch auf mindestens den Druck, unter dem bei der hohen Temperatur das Diol-Glykolysat-Gemisch flüssig bleibt, d.h. Drucke bis 100 bar;

5. intensiver Stoffaustausch innerhalb der Reaktionszone, in welcher die glykolytische Spaltung abläuft, während 5–15 Minuten;

6. Entspannung des Glykolysates auf Normaldruck;

7. Abkühlung des Glykolysates auf weniger als 150 °C, besonders bevorzugt auf 80–100 °C, in weniger als 30 Minuten, vorzugsweise in 5–15 Minuten;

8. kontinuierlicher Austrag des Glykolysates.

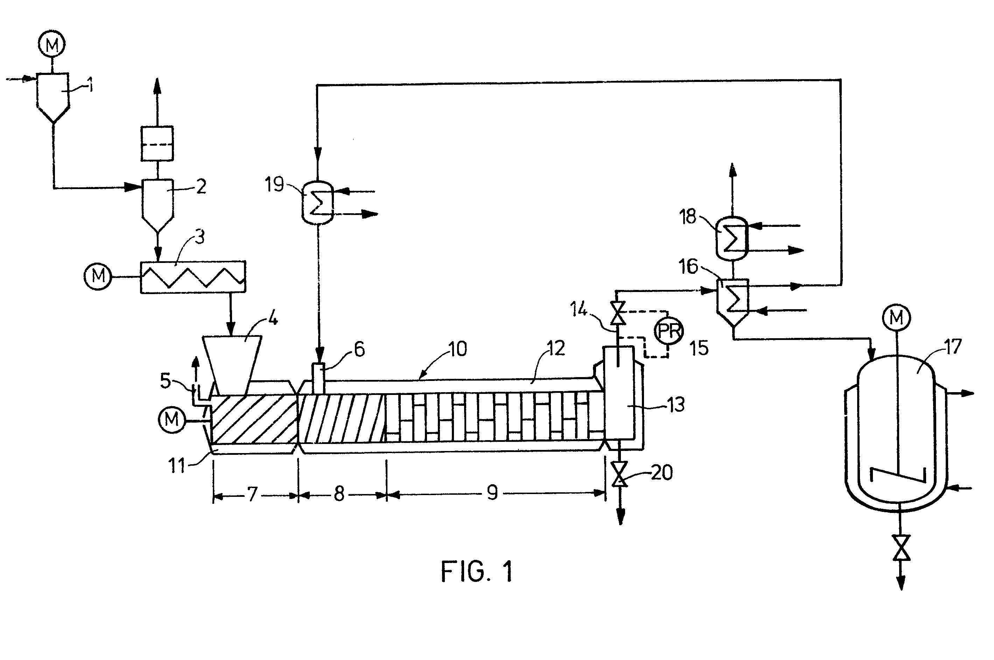

Eine besonders geeignete Vorrichtung für die Durchführung dieser Verfahrensschritte ist eine Schneckenmaschine, die, wie in Abb. 1 schematisch dargestellt, ausgerüstet ist:

Die in einer Kunststoffmühle (1) zerkleinerten Polyurethanabfälle werden aus einem Silo (2) mit Hilfe einer kontinuierlichen Dosiereinrichtung (3) über einen Trichter (4) in die Schneckenmaschine eingebracht. Luft kann entgegen der Förderrichtung vor dem Aufgabetrichter über eine Gehäusebohrung (5) entweichen, an der vorteilhafterweise ein leichtes Vakuum anliegt. Kurz nach dem Trichter (in Förderrichtung) wird über eine zweite Gehäusebohrung (6), vorzugsweise mittels einer Düse, das zur Spaltung benötigte Glykol in die Schneckenmaschine eindosiert.

Der Schneckenbesatz der Schneckenspindel kann in mehrere Zonen aufgeteilt werden: im ersten Teil der Schneckenmaschine bis kurz hinter dem Aufgabetrichter (4) wird ein Gewinde mit grosser Steigung (Schluckgewinde (7), ca. 10 bis 18%, vorzugsweise 11 bis 15% der Gesamtlänge der Schnecke) verwendet. Anschliessend wird zur Komprimierung des Kunststoffes ein Gewinde kleiner Steigung (Druckaufbaugewinde (8), ca. 10 bis 17%, vorzugsweise etwa 12 bis 15% der Schneckenlänge) eingesetzt. Nach dem Druckaufbaugewinde werden auf der gesamten restlichen Schneckenspindel Knetscheiben (9) aufgeschoben.

Das gesamte Schneckengehäuse (10) ist mit einer Temperiervorrichtung (Kühlung (11) bzw. Heizung (12)) versehen. An das Ende des Schneckengehäuses, aus dem die Schneckenspindel noch ein wenig herausragt, ist ein spezielles Mundstück (13) angeflanscht, aus welchem das Glykolysat über ein Tauchrohr (14), welches für einen konstanten Füllstand im Mundstück sorgt, sowie über ein mit einer Druckregelung (15), welche einen konstanten Arbeitsdruck im Mundstück aufrechterhält, versehenes Ventil austritt. Das austretende Glykolysat wird unter Abkühlung in einem mit einem Kondensator (18) versehenen Wärmetauscher (16) entspannt und kann aus einem ebenfalls gekühlten Auffangbehälter (17) kontinuierlich oder chargenweise entnommen werden.

Die Vorerhitzung des für die Spaltung verwendeten Diols auf 150–250 °C erfolgt mit Hilfe des heissen Glykolysats im Wärmetauscher (16) sowie erforderlichenfalls über einen zweiten Wärmetauscher (19). Nach beendeter Reaktion können Schnecke und Mundstück über ein Ablassventil (20) entleert werden.

Um einen grossen Durchsatz bei der notwendigen Verweilzeit und möglichst engem Verweilzeitspektrum zu erreichen, empfiehlt sich der Einsatz tiefgeschnittener (grossvolumiger), gleichsinnig rotierender Doppelschnecken.

Die in der beschriebenen Schneckenmaschine durchgeführte glykolytische Spaltung kann selbstverständlich auch in Gegenwart von Katalysatoren und/oder unter Mitverwendung von Cospaltern, wie z.B. Aminen, Alkanolaminen oder Lactamen, durchgeführt werden; vorzugsweise wird jedoch auf diese, grundsätzlich nicht erforderlichen Zusätze verzichtet, die zwar niedrigere Spalttemperaturen erlauben, aber wegen der veränderten Reaktivitäten zu minderwertigeren Regeneratpolyolen führen.

Kennzeichnende Merkmale der erfindungsgemässen glykolytischen Spaltung sind:

1. der durch die Knetelemente der Schnecke bewirkte optimale Stoff- und Energieaustausch auch bei Zusatz nur geringer Spaltdiolmengen,

2. die aussergewöhnlich hohen Spalttemperaturen, die auch bei nur geringer Spaltglykolkonzentration die Spaltgleichgewichtslage in die gewünschte Richtung begünstigen und zu wirtschaftlich kurzen Reaktionszeiten führen,

3. die kurzen Reaktionszeiten, die trotz der hohen Spalttemperaturen ein überraschenderweise thermisch praktisch ungeschädigtes Glykolysat liefern, welches Glykolysaten herkömmlicher diskontinuierlicher Verfahren trotz deren niedrigerer Spalttemperaturen in dieser Hinsicht überlegen ist,

4. die Aufrechterhaltung eines mindestens so hohen Drucks, dass das Diol-/Glykolysat-Gemisch flüssig bleibt und

5. die schnelle Abkühlzeit nach erfolgter Spaltung, um nachträgliche thermische Belastungen sowie mögliche Rekondensationen zu vermeiden.

Bei schwieriger zu spaltenden Polyurethanen, z.B. bei Polyisocyanuraten und hartsegmentreichen Elastomeren, insbesondere jedoch zur Bindung saurer Spaltprodukte bei Phosphatester enthaltenden, flammwidrigen Polyurethanen, empfiehlt sich die Mitverwendung von Alkaliglykolaten bei der Spaltung. Überschüssiges Alkali kann nach der Spaltung durch Neutralisation, z.B. mit Phosphorsäure, als Salz gebunden und abfiltriert werden; ein derartiger Verfahrensschritt ist üblicher Bestandteil der grosstechnischen Polyetherherstellung.

Im Gegensatz zu speziellen Umurethanisierungskatalysatoren oder Cospaltern haben Alkaliglykolate auf diese Weise keinen nachteiligen Einfluss auf die Glykolysateigenschaften. Infolge dieser Unbedenklichkeit empfiehlt sich ihr Zusatz im Sinne einer universellen Anwendbarkeit des erfindungsgemässen Verfahrens auch bei der Spaltung unbekannter Abfälle bzw. Abfallgemische.

Für die glykolytische Spaltung geeignete Diole sind alle aliphatischen Diole mit 2 bis ca. 20 Kohlenstoffatomen, z.B. Ethylenglykol, Diethylenglykol, Triethylenglykol, Tetraethylenglykol, Propylenglykol, Dipropylenglykol, Tripropylenglykol, Oligopropylenglykol, Butandiole, Dibutylenglykole, Pentandiole, 3-Methylpentandiol-1,5, Neopentylglykol, Hexandiole, Heptandiole oder Octandiole. Ein geeignetes Spaltglykol ist ferner der an Dimethylolpropan reiche Destillationsvorlauf der technischen Trimethylolpropanherstellung. Als Spaltdiole können ebenfalls Tri- und Tetraalkohole verwendet werden, z.B. Glycerin, Trimethylolpropan, Hexantriole und Pentaerythrit. Vorzugsweise werden Tri- und Tetraalkohole jedoch nicht allein, sondern im Gemisch mit Diolen eingesetzt.

Die gegebenenfalls mitzuverwendenden Alkaliglykolate werden durch Zusatz von 5–20 Gew.-% Alkalihydroxid, z.B. Kalium- oder Natriumhydroxid, zu den entsprechenden Spaltdiolen und nachfolgende Azeotropentwässerung erhalten, entsprechend der für die Herstellung alkalischer Starter bei der grosstechnischen Polyetherherstellung allgemein bekannten Verfahrensweise.

Die nachfolgenden Beispiele dienen der näheren Erläuterung des Verfahrens. Die in den Beispielen verwendete Doppelwellenschneckenmaschine (Typ ZDS-KG 90 der Firma Werner & Pfleiderer) enthielt eine gleichsinnig rotierende Doppelschnecke mit einer variablen Drehzahl von 0–300 U/min, einem Wellendurchmesser von 90 mm, einer Länge von 2200 mm und einem Volumen von 8,2 l. Das Volumen des Mundstücks betrug ca. 0,5 l. Bei Durchsätzen von 40–60 kg/h betrugen die mittleren Verweilzeiten ca. 8–13 Minuten.

Die Steigung des Schneckengewindes in der 330 mm langen Schluckgewindezone (Eingabezone für die Polyurethanabfälle) betrug 120 mm (zweigängig) und verringerte sich in der anschliessenden, 260 mm langen Druckaufbauzone stufenweise von 60 mm auf 30 mm (jeweils zweigängig). Die daran anschliessende, 1610 mm lange Reaktionszone war zunächst mit einem um 30 °C versetzten Linksknetblock (30 mm) zur Unterstützung des Druckaufbaus und anschliessend mit um 30° versetzten Rechtsknetblöcken bestückt.

Beispiel 1

Zerkleinerte Abfälle eines handelsüblichen Polyurethan-Weichschaums auf der Basis Polyester (schwach verzweigter Polyester aus Adipinsäure, Diethylenglykol und Trimethylolpropan mit einer OH-Zahl von 57–63) und Toluylendiisocyanat wurden in einem konstanten Mengenstrom von 42 kg/ Stunde dem Aufgabetrichter der Schneckenmaschine zugeführt. Gleichzeitig wurde in ebenfalls konstantem Mengenstrom 11,7 kg/Stunde auf 180 °C vorerhitztes Propylenglykol mit Hilfe einer Kolbendosierpumpe in die Schneckenmaschine eingespeist. Die Einzugszone der Schneckenmaschine blieb unbeheizt, Kompressions- und Reaktionszone wurden auf 290 °C beheizt. Die Schneckenwellendrehzahl betrug 200 min$^{-1}$, der Arbeitsdruck betrug 10 bar. Das bei einer mittleren Verweilzeit von etwa 10 Minuten mit einer Temperatur von 280 °C am Schneckenkopf austretende Glykolysat wurde innerhalb etwa 10 Minuten auf etwa 90 °C abgeschreckt. Man erhielt ein hellbraunes Polyol mit folgenden Analysendaten:

Hydroxylzahl: 436,4
Säurezahl: 1,5
Viskosität (25 °C): 4180 mPa · s

Das erhaltene Regeneratpolyol liess sich im Verschnitt mit einem auf Saccharose gestarteten Reinpolyether (Anlagerungsprodukt von Propylenoxid an ein Gemisch aus Saccharose, 1,2-Propylenglykol und Wasser; OH-Zahl 320) nach folgender Rezeptur zu einem brauchbaren Polyurethanschaum umsetzen:

50,0 Gew.-Tle. Regeneratpolyol,
50,0   „   Saccharosepolyether,
1,2   „   Dimethylbenzylamin,
1,0   „   50%ige wässrige Lösung von sulfoniertem Ricinusöl,
0,5   „   eines handelsüblichen Silicon-stabilisators (Stabilisator OS 710 der Bayer-AG-Leverkusen)
25,0   „   Monofluortrichlormethan,
159,0   „   technisches Diphenylmethandiisocyanat mit einem Isocyanatgehalt von 26%. (Desmodur 44-P16; Bayer AG, D-5090 Leverkusen).

Die mit einem hochtourigen Rührer intensiv vermischten Reaktionskomponenten ergaben bei einer Startzeit von 15 Sekunden und einer Steigzeit von 6,5 Minuten einen stabilen Hartschaum mit gleichmässiger, geschlossenzelliger Porenstruktur und einer Rohdichte von 50,2 kg/m$^3$.

Beispiel 2

Unter den in Beispiel 1 beschriebenen Bedingungen wurden 40 kg/Stunde des Polyesterpolyurethan-Weichschaumabfalls mit 15 kg/Stunde Diethylenglykol umgesetzt. Dabei wurde ein Regeneratpolyol mit folgenden Analysendaten erhalten:

OH-Zahl: 434,7
Säurezahl: 2,7
Viskosität (25 °C): 1830 Pma · s

Dieses Regeneratpolyol liess sich sowohl allein (Rezeptur a) als auch im Verschnitt mit Reinpolyether (Rezeptur b) zu brauchbarem Polyurethanhartschaum umsetzen.

Rezeptur a:
100,0 Gew.-Tle. Regeneratpolyol,
1,2   „   Dimethylbenzylamin,
1,0   „   sulfoniertes Ricinusöl (50%ige wässrige Lösung)
0,5   „   Siliconstabilisator OS-710,
25,0   „   Monofluortrichlormethan,
188,0   „   technisches Diphenylmethandiisocyanat (26% NCO)
Startzeit: 8 Sekunden
Steigzeit: 3,5 Minuten

Es wurde ein stabiler, geschlossenzelliger Hartschaum mit ziemlich regelmässiger Porenstruktur und einer Rohdichte von 70,3 kg/m$^3$ erhalten.

Rezeptur b:
50,0 Gew.-Tle. Regeneratpolyol,
50,0   „   Saccharosepolyether aus Beispiel 1,
1,2   „   Dimethylbenzylamin,
1,0   „   sulfoniertes Ricinusöl (50%ige wässrige Lösung),
0,5   „   Siliconstabilisator OS-710,
25,0   „   Monofluortrichlormethan,
159,0   „   technisches Diphenylmethandiisocyanat (26% NCO).
Startzeit: 10 Sekunden
Steigzeit: 6 Minuten

Es bildete sich ein stabiler, geschlossenzelliger Hartschaum mit sehr regelmässiger Porenstruktur und einer Rohdichte von 48,6 kg/m$^3$.

Beispiel 3

52,4 kg/Stunde zerkleinerter Abfälle eines handelsüblichen Polyurethan-Weichschaums auf der Basis Polyether (80% eines auf Trimethylolpropan mit Propylenoxid (ca. 85 Gew.-%) und Ethylenoxid (ca. 15 Gew.-%) hergestellten trifunktionellen Copolyethers mit einer OH-Zahl von 33–37 und 20% eines durch Anlagerung von Ethylenoxid/Propylenoxid (10:90) an ein Gemisch von Trimethylpropan und Propylenglykol (85:15) erhaltenen Copolyethers mit einer OH-Zahl von 46–52) und Toluylendiisocyanat sowie 14 kg/Stunde Diethylenglykol wurden unter den in Beispiel 1 beschriebenen Betriebsbedingungen umgesetzt. Dabei wurde ein Regeneratpolyol mit folgenden Analysen erhalten:

| | |
|---|---|
| Hydroxylzahl: | 198,3 |
| Säurezahl: | 1,1 |
| Viskosität (25 °C): | 1920 mPa · s |

Das Regenerat liess sich in Abmischung mit dem in Beispiel 1 beschriebenen Saccharosepolyether zu einem Hartschaum umsetzen:

| | | |
|---|---|---|
| 50,0 Gew.-Tle. | | Regeneratpolyol, |
| 50,0 | " | Saccharosepolyether, |
| 1,2 | " | Dimethylbenzylamin, |
| 1,0 | " | sulfoniertes Ricinusöl (50%ige wässrige Lösung), |
| 0,5 | " | Siliconstabilisator (OS-710-Bayer AG), |
| 25,0 | " | Monofluortrichlormethan, |
| 108,0 | " | technisches Diphenylmethandiisocyanat (26% NCO) |

Startzeit: 10 Sekunden
Steigzeit: 2,5 Minuten
Der Hartschaum hatte eine Rohdichte von 54,4 kg/m³.

Beispiel 4

Unter den Betriebsbedingungen des Beispiels 1 wurden 41,2 kg/Stunde des Polyetherpolyurethan-Weichschaumabfalls aus Beispiel 3 und 10 kg/Stunde des technischen, dimethylolpropanreichen Destillationsvorlaufs aus der Trimethylolpropanherstellung mit einer Hydroxylzahl von 796 miteinander umgesetzt. Es wurde ein rötlich-braunes Regeneratpolyol mit folgenden Analysenwerten erhalten:

| | |
|---|---|
| Hydroxylzahl: | 235,9 |
| Säurezahl: | 1,0 |
| Viskosität (25 °C): | 4640 mPa · s |

Das Regeneratpolyol liess sich im Verschnitt mit dem in Beispiel 1 erwähnten Saccharosepolyether glatt zu einem Hartschaum umsetzen:

| | | |
|---|---|---|
| 66,7 Gew.-Tle. | | Regeneratpolyol, |
| 33,3 | " | Saccharosepolyether, |
| 1,2 | " | Dimethylbenzylamin, |
| 1,0 | " | sulfoniertes Ricinusöl (50%ige wässrige Lösung), |
| 0,5 | " | Siliconstabilisator (OS-710-Bayer AG), |
| 25,0 | " | Monofluortrichlormethan, |
| 114,0 | " | technisches Diphenylmethandiisocyanat (26% NCO) |

Startzeit: 10 Sekunden

Steigzeit: 4,5 Minuten
Rohdichte des Hartschaums: 51,0 kg/m³

Beispiel 5
a) Herstellung von Propylenglykol-Alkoholat

6750 Gew.-Tle. Propylenglykol wurden mit 750 Gew.-Teilen 50%iger wässriger Kalilauge versetzt und nach Zugabe von ca. 500 Gew.-Teilen Toluol bei einer Sumpftemperatur von ca. 120 °C azeotrop entwässert. Nach beendeter Wasserabspaltung und Abstrippen des Toluols wurden 7000 Gew.-Teile Propylenglykolalkoholat erhalten.

b) Glykolyse von technischem Polyurethanhartschaum-Abfall unbekannter Zusammensetzung
40 kg/Stunde eines bei der Dämmplattenproduktion anfallenden Polyurethanhartschaum-Abfallgemisches unbekannter Zusammensetzung mit wechselndem Flammschutz- und Isocyanuratgruppengehalt und 20 kg/h des unter (a) hergestellten Propylenglykolalkoholats wurden unter den Betriebsbedingungen des Beispiels 1 miteinander umgesetzt. Es entstand in glatter Reaktion ein homogenes, braunes Regeneratpolyol mit folgenden Analysendaten:

| | |
|---|---|
| Hydroxylzahl: | 609,1 |
| Basenzahl: | 3,9 |
| Viskosität (50 °C): | 5054 mPa · s |

Das Regeneratpolyol konnte ohne weitere Nachbehandlung im Verschnitt mit dem in Beispiel 1 beschriebenen Saccharosepolyether zu einem brauchbaren Hartschaum umgesetzt werden:

| | | |
|---|---|---|
| 50,0 Gew.-Tle. | | Regeneratpolyol, |
| 50,0 | " | Saccharosepolyether, |
| 1,2 | " | Dimethylbenzylamin, |
| 1,0 | " | sulfoniertes Ricinusöl (50%ige wässrige Lösung), |
| 0,5 | " | Siliconstabilisator OS-710 (Bayer AG), |
| 25,0 | " | Monofluortrichlormethan, |
| 197,0 | " | technisches Diphenylmethandiisocyanat (26% NCO) |

Startzeit: 10 Sekunden
Steigzeit: 2,5 Minuten
Rohdichte des Hartschaums: 40,1 kg/m³

Beispiel 6
41 kg/Stunde zerkleinerter Abfälle eines Polyurethan-Hartschaumes auf der Basis des in Beispiel 1 erwähnten Saccharosepolyethers und technischen Diphenylmethandiisocyanats wurden unter den in Beispiel 1 beschriebenen Reaktionsbedingungen mit 10,3 kg/Stunde Ethylenglykol umgesetzt. Das kontinuierlich aus dem Auffangbehälter der Spaltanlage ausgetragene Regeneratpolyol wurde einem Mischkopf zugeführt und unmittelbar mit 50 kg/Stunde des reinen Saccharosepolyethers kontinuierlich verschnitten. Das erhaltene Polyolgemisch hatte folgende Analysenwerte:

Hydroxylzahl:      376,7
Säurezahl:      0,7
Viskosität (25 °C):      22 400 mPa · s

Das Polyolgemisch liess sich nach folgender Rezeptur zu einem brauchbaren Hartschaum umsetzen:

| | | |
|---|---|---|
| 100,0 | Gew.-Tle. | Polyolgemisch, |
| 1,2 | ,, | Dimethylbenzylamin, |
| 1,0 | ,, | sulfoniertes Ricinusöl (50%ige wässrige Lösung), |
| 0,5 | ,, | Siliconstabilisator (OS-710), |
| 3,0 | ,, | Wasser, |
| 184,0 | ,, | technisches Diphenylmethan-diisocyanat (26% NCO) |

Startzeit: 20 Sekunden
Steigzeit: 2,5 Minuten
Rohdichte des Hartschaums: 43,8 kg/m³.

## Patentansprüche

1. Verfahren zum glykolytischen Abbau von Polyurethankunststoffabfällen durch Zusatz von gegebenenfalls vorerhitzten Diolen, gegebenenfalls in Gegenwart von Alkalialkoholaten als Katalysator und Durchführung bei erhöhten Temperaturen und unter erhöhtem Druck, welches dadurch gekennzeichnet ist, dass kontinuierlich die Kunststoffabfälle zusammen mit den auf 150–250 °C erhitzten Diolen im Gewichtsverhältnis 5:1 bis 2:1, sowie gegebenenfalls unter Zusatz von Alkaliglykolaten, in eine mehrwellige Schneckenmaschine eingespeist werden, wo das Gemisch aus Kunststoffabfällen und Diolen sowie gegebenenfalls Alkaliglykolaten in einer Reaktionszone unter intensivem Stoff- und Wärmeaustausch in einer mittleren Reaktionszeit von 5 bis 15 Minuten bei einer Temperatur von 260 bis 330 °C, unter Aufrechterhaltung einer flüssigen Diolphase in der Spaltmischung durch einen Druck bis 100 bar gehalten wird und das bei der glykolytischen Spaltung entstehende polyolhaltige Spaltgemisch über ein mit der Schneckenmaschine verbundenes Mundstück unter Aufrechterhaltung des Verflüssigungsdruckes und eines konstanten Flüssigkeitsniveaus in ein gekühltes Entspannungsgefäss und in einen gekühlten Auffangbehälter austritt, wobei die Temperatur des erhaltenen Spaltpolyolgemischs in weniger als 30 Minuten auf weniger als 150 °C abgesenkt wird.

2. Verfahren nach Anspruch 1, dadurch gekennzeichnet, dass die zusammen mit den Kunststoffabfällen in die Schneckenmaschine eingebrachte Luft durch eine in der Förderrichtung gesehen vor dem Aufgabetrichter für das Kunststoffmaterial gelegene Gehäusebohrung entfernt wird, an welche ein Vakuum angelegt werden kann.

3. Verfahren nach Ansprüchen 1 und 2, dadurch gekennzeichnet, dass man das zur Spaltung benutzte Diol über Wärmeaustauscher am Austragsteil der Mehrwellenschnecke für die Einführung in die Mehrwellenschnecke, gegebenenfalls unter Mitverwendung eines weiteren Wärmeaustauschers, auf Temperaturen von 150–250 °C vorheizt.

## Claims

1. Process for the glycolytic degradation of polyurethane plastics waste by the addition of optionally preheated diols, optionally in the presence of alkali metal alcoholates as catalysts and operation at elevated temperatures and elevated pressure, characterised in that the plastics waste is continuously fed into a multishaft screw together with the diols heated to 150–250 °C in a ratio by weight of from 5:1 to 2:1 and optionally with the addition of alkali metal glycolates, in which screw the mixture of plastics waste and diols and optionally alkali metal glycolates is maintained in one reaction zone with vigorous exchange of material and heat for an average reaction period of from 5 to 15 minutes at a temperature of from 260 to 330 °C while a liquid diol phase is maintained in the decomposition mixture by a pressure of up to 100 bar and the polyol-containing decomposition mixture formed in the process of glycolytic decomposition is discharged into a cooled depressurising vessel and a cooled receiver through a tip connected to the screw while the liquefaction pressure and a constant liquid level are maintained, the temperature of the resulting decomposition polyol mixture being lowered to below 150 °C in less than 30 minutes.

2. Process according to Claim 1, characterised in that the air which is introduced into the screw together with the plastics waste is removed through a bore in the housing, which bore is situated upstream of the feed funnel for plastics material, viewed in the direction of transport, and to which bore a vacuum may be applied.

3. Process according to Claims 1 and 2, characterised in that the diol used for decomposition is preheated to temperatures of from 150 to 250 °C by heat exchangers in the discharge part of the multishaft screw for introduction into the multishaft screw, optionally with the added use of another heat exchanger.

## Revendications

1. Procédé de dégradation glycolytique de déchets de matières plastiques du type polyuréthanne par l'addition de diols, le cas échéant préalablement chauffés, éventuellement en présence d'alcoolates alcalins comme catalyseur et avec mise en œuvre à des températures élevées et sous pression élevée, caractérisé en ce que les déchets de matières plastiques sont injectés en continu avec les diols chauffés à 150–250 °C dans un rapport en poids de 5:1 à 2:1, ainsi que, le cas échéant, avec addition de glycolates alcalins, dans une machine à plusieurs vis sans fin où le mélange de déchets de matière plastique et de diols ainsi que, le cas échéant, de glycolates alcalins est maintenu dans une zone de réaction dans des conditions d'échange intensif de matière et de chaleur pendant une durée moyenne de réaction de 5 à 15 minutes à une température de 260 à 330 °C, en entretenant une phase de diol liquide dans le mélange décomposé par une pression allant jusqu'à 100 bars, et le mélange contenant des polyols, produit par décomposition glycolytique, sort par une embouchure en liaison avec la vis sans fin, avec maintien d'une pression de fluidification et d'un niveau constant de liquide, dans un récipient refroidi de détente et dans un collecteur refroidi, la température du mélange de polyols obtenu par décomposition étant abaissée en moins de 30 minutes, de préférence à moins de 150°C.

2. Procédé suivant la revendication 1, caractérisé en ce que l'air introduit dans la machine à vis sans fin conjointement avec les déchets de matière plastique est éliminé par un orifice prévu sur le boîtier en avant de la trémie de chargement de la matière plastique, vu dans la direction de transport, au niveau duquel un vide peut être créé.

3. Procédé suivant les revendications 1 et 2, caractérisé en ce qu'on chauffe préalablement à des températures de 150 à 250°C le diol utilisé pour la coupure, au moyen d'un échangeur de chaleur prévu dans la partie de décharge de la vis multiple pour son introduction dans cette vis, en utilisant, le cas échéant, un autre échangeur de chaleur.

0 105 167

FIG. 1